# EUROPEAN PATENT APPLICATION

(11) **EP 2 252 033 A1**
(43) Date of publication of application: **17.11.2010**
(21) Application number: 10003307.5
(22) Date of filing: 26.03.2010
(51) Int. Cl.: H04L 29/06, H04L 9/32, G06F 21/00

(54) **Bidirectional communication certification mechanism**

(30) Priority: 13.04.2009 TW 098112162
(71) Applicant: Gamania Digital Entertainment Co., Ltd., Chung-Ho City T'ai pei County (TW)
(72) Inventor: Hsu, Wu-Hsien, Chung-Ho City Taipei County (TW)
(74) Representative: Karakatsanis, Georgios

(57) **Abstract**

The present invention is to provide a bidirectional communication certification mechanism, which comprises the steps of receiving a call-in message transmitted from a phone (21) of a user (101), capturing a phone number (102) and a temporary password transmitted from the phone (103), saving the phone number and temporary password into a number database (104,131), receiving and reading a game account, a game password, the phone number and the temporary password included in a login request message transmitted from a terminal device (31) of the user, comparing the same with user data stored in a user database (106,131), and allowing the terminal device (31) to finish a login procedure when the phone number and temporary password are existed in the user database (108,131). Since the phone number and the temporary password are preset by the user, it will ensure the terminal device (31) to safely login a game server (15) and efficiently lower down the stolen risk of the game account.

## Description

### FIELD OF THE INVENTION

The present invention relates to a communication certification mechanism, more particularly to a bidirectional communication certification mechanism which enables a user (i.e. a client) to preset at least one phone number when the user registers to become a member of an online game and then, when the user wants to login the online game, enables the user to use the preset phone number to set a temporary password for finishing the login procedure.

### BACKGROUND OF THE INVENTION

Presently, with the popularization of broadband networks, the type diversity of online games (such as strategy type, shooting type, action type, large-scale multiplayer online role-playing game, etc.) and the increase of online game functions (such as community, friend, etc.), a market research company "In-Stat" estimates that the total income of Asia-pacific online gaming market can be up to 21.1 billion dollars between 2008 and 2013. Thus, a so-called "home economy" based on online games becomes a new business model, so that more and more game providers gradually combine online games with other hardware products or provide cross-industry value-added services for increasing the profit.

Generally, when a user uses a value-added service on a website provided by a game provider or purchases a virtual treasure in a main online game (such as Lineage, MapleStory, CrazyRacing, etc.), the user must use virtual money issued by the game provider for shopping. The sources of virtual money are approximately classified into two types: a first type is money which can be obtained by the user during the user plays the main online game for executing tasks, fighting monsters, performing actions, etc., and a second type is money which is exchanged by using actual money. Because the virtual money has the function of purchasing services or virtual tools, most of users consider the virtual money as one type of individual properties and carefully protect it. Meanwhile, because the virtual money is belonged to the individual game account and has actual value effect, the acts of stealing online game accounts cause the trouble of the game providers and the users. To solve this problem, the game providers gradually provide various protection measures for increasing the safety of the online game accounts and lowering the stolen risk of the online game accounts.

Nowadays, the most common protection measure is to set a specific game password for the online game account by the user, wherein the password is preset to only include limited characters, such as equal to or less than 10 characters which must simultaneously include English uppercase/lowercase letter and number, in order to increase the complexity of the password and lower the cracked possibility thereof. In addition, when the user want to login an online game server, some game providers provide a random keyboard, i.e. a keyboard image shown in an operational window has random arranged English letters and numbers for being clicked by using a mouse to input the user's password. Thus, it can prevent a key logger software (i.e. a software capable of capturing and recording code values of pressed keys after the keys of the keyboard are pressed) in the user's computer from stealing the user's game password. However, the foregoing protection measure is only used to change the game password. Once an illegal account stealer obtains the user's game password, the stealer can completely control the user's game password and then steal virtual money, virtual treasures, game players or value-added services in the user's game password, so as to cause the right loss of the user. Moreover, after the user's game password is stolen, the user may think that all efforts in the online game are lost, so as to want to give up the online game or change to play another online game. Therefore, the profit of the original online game provider may be lost.

As a result, it is important for game designers to think how to design a communication certification mechanism with higher safety, in order to lower the stolen probability of the user's game account and to provide safer game environment to obtain the user's trust for the purpose of maintaining and increasing the market share of the game provider.

It is therefore tried by the inventor to develop a bidirectional communication certification mechanism to provide safer online games for solving the problems existing in the login method of traditional online games that can not completely protect online game accounts of users to cause the right loss of the user and the user loss of original customers of the game provider, as described above.

### BRIEF SUMMARY OF THE INVENTION

A primary object of the present invention is to provide a communication certification system of a bidirectional communication certification mechanism, which comprises an interactive voice module, a communication lock server and a game server, wherein the interactive voice module is connected to a voice communication network and the communication lock server, respectively. The interactive voice module can receive a call-in message transmitted from a phone through the voice communication network, then capture a phone number corresponding to the call-in message and a temporary password included at least one key code value transmitted after the phone is connected, and transmit the phone number and the temporary password to the communication lock server. Furthermore, the communication lock server is further connected to the game server, and provided with a number database and a timing procedure therein, wherein the number database can save the phone number and the temporary password received by the communication lock server, while the timing procedure can start to time when the number database receives the phone number and the temporary password and delete the phone number and the temporary password after a predetermined time. Moreover, the game server is further connected to the Internet, and link to a terminal device of a user (i.e. a client) through the Internet, wherein the game server has a user database therein and the user database stores a plurality of user data. When the game server receives a login request message of communication lock transmitted from the terminal device, a game account, a game password, a phone number and a temporary password included in the login request message of communication lock will be compared with the user data in the user database, while the communication lock server will be certificated if a matched phone number and a corresponding temporary password are existed in the communication lock server. If the certification of the communication lock server is correct, the terminal device is allowed to finish a login procedure. As a result, the communication certification mechanism of the present invention not only can provide functions of certificating the game account and the game password of a user, but also can provide functions of certificating the phone number predetermined by the user and the temporary password preset by the user. Thus, the safety of the user's terminal device to login the game server can be ensured, while the stolen risk of the game account can be efficiently lowered down.

A secondary object of the present invention is to provide a communication certification method of a bidirectional communication certification mechanism, which is applied to the foregoing communication certification system, so that the terminal device of the user can set a temporary password through a predetermined phone number before the login procedure of the terminal device into the game server, wherein the temporary password is matched with the game account and the game password for finishing the entire login procedure to increase the safety of the user's game account. The communication certification method comprises steps of: providing an interactive voice module to capture a phone number corresponding to a call-in message by an interactive voice module after receiving the call-in message transmitted from a phone, to receive a temporary password transmitted from the phone after the phone is connected, and to transmit the phone number and the temporary password to a communication lock server; providing the communication lock server to save the phone number and the temporary password in a number database after receiving the phone number and the temporary password, to execute a timing procedure, and to delete the phone number and the temporary password after a predetermined time; providing a game server to read a game account, a game password, a phone number and a temporary password included in the login request message of communication lock after receiving a login request message of communication lock transmitted from the terminal device, to compare the game account, the game password and the phone number with user data in a user database, and to transmit a certification message to the communication lock server after comparing to find out a complete matched user data, in order to certificate if a matched phone number and a corresponding temporary password are existed in the communication lock server, to allow the terminal device to login the game server after passing the certification. As a result, the phone number can be preset by the user, and the user must finish the login procedure of the terminal device within the predetermined time after presetting the temporary password, in order to login a game of the game server or use a service provided by a game provider. Thus, the stolen risk of the user's game account completely controlled by a stealer can be lowered down.

To achieve the above objects, a communication certification system of a bidirectional communication certification mechanism of a preferred embodiment of the present invention comprises: an interactive voice module connected to a voice communication network for receiving a call-in message transmitted from a phone and capturing a phone number corresponding to the call-in message, so as to obtain a temporary password transmitted from the phone; a communication lock server connected to the interactive voice module for transmitting messages to each other and for saving the phone number and the corresponding temporary password transmitted from the interactive voice module; and a game server connected to the Internet for receiving a login request message of communication lock transmitted from a terminal device, wherein the game server stores a plurality of user data, each of which includes a game account, a game password and at least one phone number; wherein the game server compares the game account, the game password and the phone number included in the login request message of communication lock with the user data in a case that the game server receives a login request message of communication lock, and the game server transmits a certification message to the communication lock server after comparing to find out a complete matched user data, and the terminal device is allowed to login the game server if certificating that a phone number and a corresponding temporary password matched with the login request message of communication lock are existed in the communication lock server.

In one embodiment of the present invention, the communication lock server is provided with a number database therein for saving the phone number and the corresponding temporary password.

In one embodiment of the present invention, the game server has a user database therein for storing the user data.

In one embodiment of the present invention, the communication lock server is further provided with a timing procedure, the timing procedure can start to time in a case that the communication lock server saves the received phone number and the corresponding temporary password in the number database, and the communication lock server can delete the phone number and the corresponding temporary password if a predetermined time of the timing procedure is exceeded.

In one embodiment of the present invention, the interactive voice module is an interactive voice response system.

On the other hand, a communication certification method of a bidirectional communication certification mechanism is applied to a communication certification system, the method comprises: capturing a phone number corresponding to a call-in message after receiving the call-in message transmitted from a phone; receiving a temporary password transmitted from the phone after the phone is connected; saving the phone number and the temporary password in a number database; receiving a login request message of communication lock transmitted from a terminal device; reading a game account, a game password, a phone number and a temporary password included in the login request message of communication lock, and then comparing the game account, the game password and the phone number with user data in a user database; and certificating if a matched phone number and a corresponding temporary password are existed in the number database after comparing to find out a user data complete matched with the game account, the game password and the phone number, and then allowing the terminal device to finish a login procedure after passing the certification.

One embodiment of the present invention further comprises: denying the terminal device to finish the login procedure if comparing to find no matched user data.

One embodiment of the present invention further comprises: denying the terminal device to finish the login procedure if comparing to find no matched phone number and corresponding temporary password existed in the number database.

In one embodiment of the present invention, the communication lock server is provided with further provided with a timing procedure, and the communication certification method further comprises: starting the timing procedure; and determining if a predetermined time of the timing procedure is exceeded.

One embodiment of the present invention further comprises: deleting the phone number and the corresponding temporary password if determining that the predetermined time of the timing procedure is exceeded.

### BRIEF DESCRIPTION OF THE SEVERAL VIEWS OF THE DRAWINGS

The structure and the technical means adopted by the present invention to achieve the above and other objects can be best understood by referring to the following detailed description of the preferred embodiments and the accompanying drawings, wherein:
FIG. 1 is a schematic view of a communication certification system according to a preferred embodiment of the present invention;
FIG. 2 is a schematic view of a web window viewed by a user according to the preferred embodiment of the present invention;
FIG. 3A is a flowchart of a communication certification method according to the preferred embodiment of the present invention;
FIG. 3B is a continued flowchart of the communication certification method in FIG. 3A; and
FIG. 4 is a flowchart of executing a timing procedure according to the preferred embodiment of the present invention.

### DETAILED DESCRIPTION OF THE INVENTION

The present invention is related to a bidirectional communication certification mechanism which can firstly preset at least one phone number when a user (i.e. a client) registers to become a member of an online game. Then, when a terminal device of the user wants to login a game server of the online game to play the online game or use an online service provided by a game provider, the user must use the predetermined phone number and then set a temporary password. In a login procedure, the user must correctly input a game account, a game password, the phone number and the temporary password for finishing the login procedure. Thus, even though the game account and the game password of the user are inadvertently leaked, the safety of the game account still can be ensured.

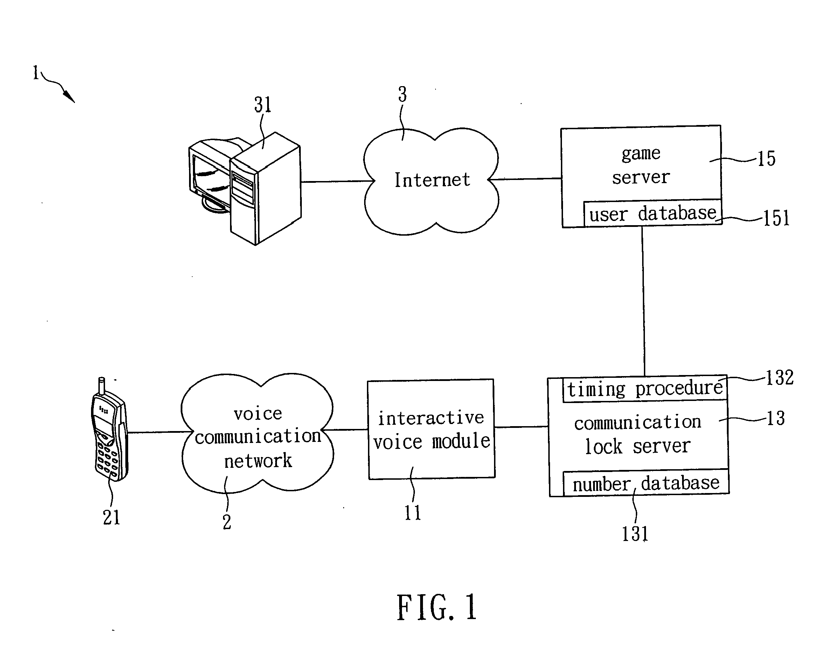

Referring now to FIG. 1, a communication certification system of a bidirectional communication certification mechanism according to a preferred embodiment of the present invention is illustrated. As shown, the communication certification system designated by numeral 1 comprises an interactive voice module 11, a communication lock server 13 and a game server 15, wherein the interactive voice module 11 is connected to a voice communication network 2 and the communication lock server 13, respectively, for transmitting messages to the voice communication network 2 or the communication lock server 13. After the interactive voice module 11 receives a call-in message transmitted from a phone 21 of a user (i.e. a client), the interactive voice module 11 can capture a phone number corresponding to the call-in message. After the phone 21 is connected, the interactive voice module 11 can receive a temporary password transmitted from the phone 21 of the user. After this, the interactive voice module 11 can transmit the phone number and the temporary password to the communication lock server 13. In the preferred embodiment, the interactive voice module 11 is an interactive voice response (IVR) system. In other words, when the phone 21 of the user transmits a call-in message to the interactive voice module 11 through the voice communication network 2, the interactive voice module 11 can automatically connect to the phone 21 and provide at least one command (such as "please input your preset temporary password") to the user according to a predetermined voice procedure. Then, the user can input suitable options by pressing keys (such as pressing a key of 1, 2 or 3) according to the command of the interactive voice module 11, so that the interactive voice module 11 can execute corresponding processes (such as to save key code values of 1, 2 and/or 3 as a temporary password) according to the received key code values. However, in other embodiment of the present invention, a game provider also can hire operators to query and answer one by one and manually input information provided by the user. Thus, if a module can capture the phone number corresponding to the call-in message and record the temporary password preset by the user, the module can be used as the interactive voice module 11 of the present invention, without limitation.

As described above, referring to FIG. 1 again, the communication lock server 13 is further connected to the game server 15 for transmitting messages to each other, while the communication lock server 13 is provided with a number database 131 therein. When the communication lock server 13 receives the phone number and the temporary password transmitted from the interactive voice module 11, the communication lock server 13 can save the phone number and the corresponding temporary password in the number database 131. In addition, the communication lock server 13 is further provided with a timing procedure 132. When the phone number and the corresponding temporary password are saved in the number database 131, the timing procedure 132 can start to time and the communication lock server 13 will delete the phone number and the temporary password after a predetermined time (such as 3 mins). Therefore, because the temporary password is not permanently saved in the communication lock server 13 and can be easily changed by the user to provide the changeability, the risk of being controlled by an illegal user can be lowered down. Moreover, the game server 15 is further connected to the Internet 3, and link to a terminal device 31 of the user (such as a personal computer, a notebook computer, etc.) through the Internet 3, wherein the game server 15 has a user database 151 therein and the user database 151 stores a plurality of user data. Each of the user data includes a game account, a game password and at least one phone number. When the game server 15 receives a login request message of communication lock transmitted from the terminal device 31 of a user, the game server 15 can read a game account, a game password, a phone number and a temporary password included in the login request message of communication lock, and then compare the game account, the game password and the phone number included in the login request message of communication lock with the game account, the game password and the phone number included in the user data in the user database 151. After comparing to find out a complete matched game account, game password and phone number of a user data, the game server 15 transmits a certification message (including the phone number and the temporary password) to the communication lock server 13, in order to certificate if a matched phone number and a corresponding temporary password are existed in the communication lock server 13. If a matched phone number and a corresponding temporary password are existed in the communication lock server 13, the terminal device 31 can pass the certification, so that the terminal device 31 is allowed to login the game server 15. Thus, the user can enter an online game or use an online service provided by a game provider through the terminal device 31. If a matched phone number and a corresponding temporary password are not existed in the communication lock server 13 (such as the phone number and the temporary password are deleted; or the phone number for presetting the temporary password is wrong), the terminal device 31 can not pass the certification, so that the terminal device 31 is denied to login the game server 15.

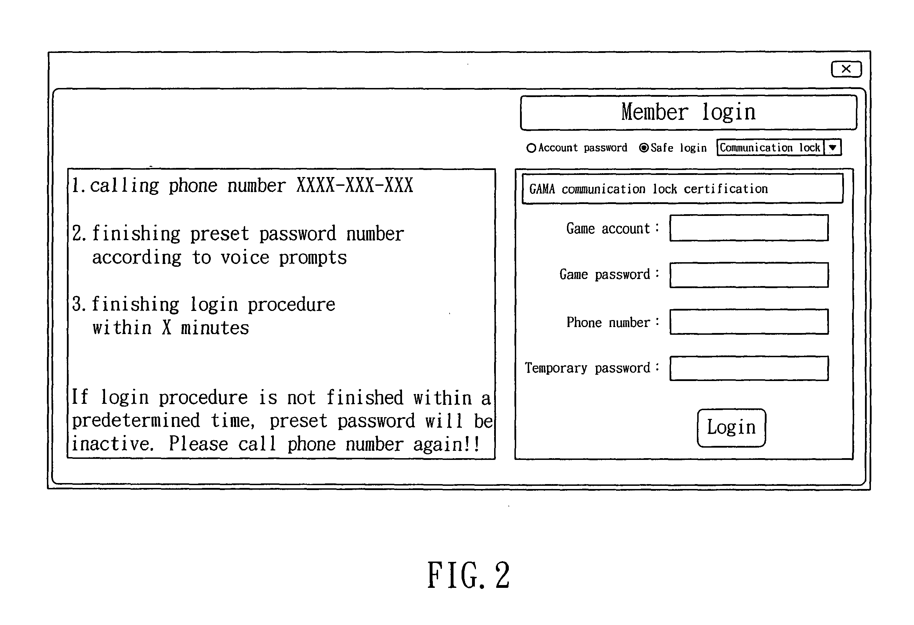

Therefore, referring still to FIG. 1, according the communication certification system 1, before the terminal device 31 of the user finishes the entire login procedure (i.e. login the game server 15), the user must use the predetermined phone number to set a temporary password. After the terminal device 31 of the user is linked to a web window of the game server 15 (as shown in FIG. 2), the user only needs to input the individual game account, the game password, the predetermined phone number and the temporary password of the user. Thus, after passing the certification, the terminal device 31 can login the game server 15. In addition, the communication lock server 13 of the game provider is provided with the timing procedure 132 to delete the temporary password and the phone number preset by the user after a predetermined time. Thus, the user needs not worry about inadvertent leakage of the temporary password to cause the game account to be stolen. Moreover, the temporary password is only preset by user before the user wants to play the game, so that the user can randomly change the temporary password without worrying to forget the temporary password, so as to increase the operational convenience of the user.

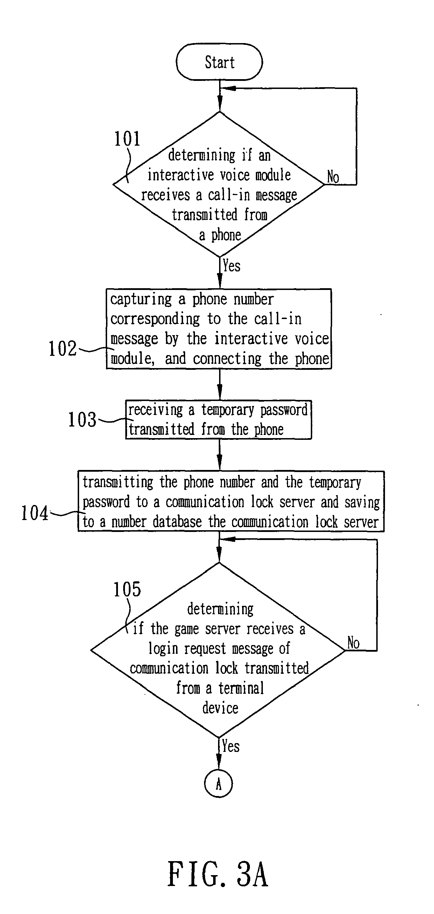

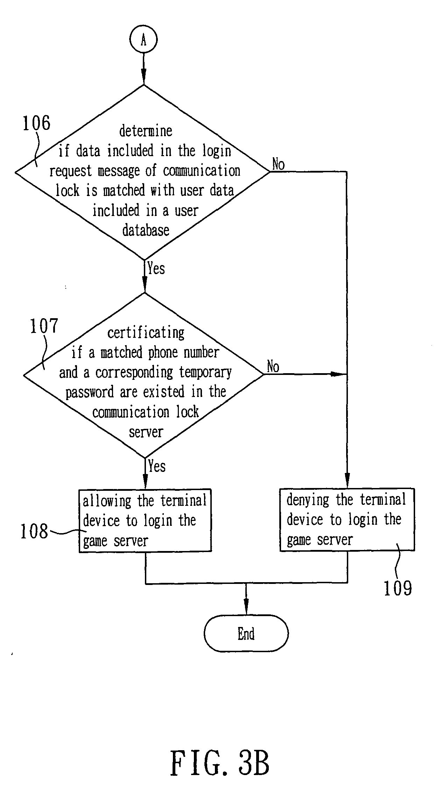

Referring now to FIGS. 1, 3A and 3B, to clearly disclose the technical feature of the bidirectional communication certification mechanism according to the present invention, a communication certification method of the present invention is further described, as follows:
In a step 101, determining if the interactive voice module 11 receives a call-in message transmitted from a phone 21; if yes, going to a step 102; and if not, going back to the step 101;
In the step 102, capturing a phone number corresponding to the call-in message by the interactive voice module 11, and connecting the phone 21, and then going to a step 103;
In the step 103, receiving a temporary password transmitted from the phone 21 by the interactive voice module 11, and then going to a step 104;
In the step 104, transmitting the phone number and the temporary password to the communication lock server 13 and saving the phone number and the temporary password to the number database 131 the communication lock server 13 by the interactive voice module 11, and then going to a step 105;
In the step 105, determining if the game server 15 receives a login request message of communication lock transmitted from a terminal device 31; if yes, going to a step 106; and if not, going back to the step 105;
In the step 106, comparing data included in the login request message of communication lock with the user data included in the user database 151 by the game server 15, in order to determine if there are matched game account, game password and phone number; if yes, going to a step 107; and if not, going to a step 109;
In the step 107, transmitting a certification message to the communication lock server 13 by the game server 15, in order to certificate if a matched phone number and a corresponding temporary password are existed in the communication lock server 13; if yes, going to a step 108; and if not, going to the step 109;
In the step 108, allowing the terminal device 31 to login the game server 15; and
In the step 109, denying the terminal device 31 to login the game server 15.

Therefore, according to the foregoing communication certification method, the user must use the predetermined phone number to set a temporary password to finish the entire login procedure before the terminal device 31 of the user logins the game server 15. Thus, in a case that the game account and the game password of the user are stolen by an illegal user, the illegal user can not simultaneously obtain the phone number of the user, so that the illegal user can not control the game account of the user. As a result, the safety of the user's game account is efficiently ensured. For example, a game account of a user "A" is "LIO", a game password thereof is "0000" and a predetermined phone number is "1234567". If an illegal user "B" firstly steals the game account, the game password and the phone number of the user "A" and then presets a temporary password through another phone number "7654321", the game server will determine that the phone number "7654321" of the number database is different from the phone number "1234567" in the user data of the user "A", so as to deny the terminal device of the user "B" to login the game server. As a result, the user "B" can not completely control the game account of the user "A", and can not steal virtual money, virtual treasures or value-added services in the game account of the user "A". Therefore, the bidirectional communication certification mechanism according to the present invention can be used to efficiently increase the safety of the game account of the user.

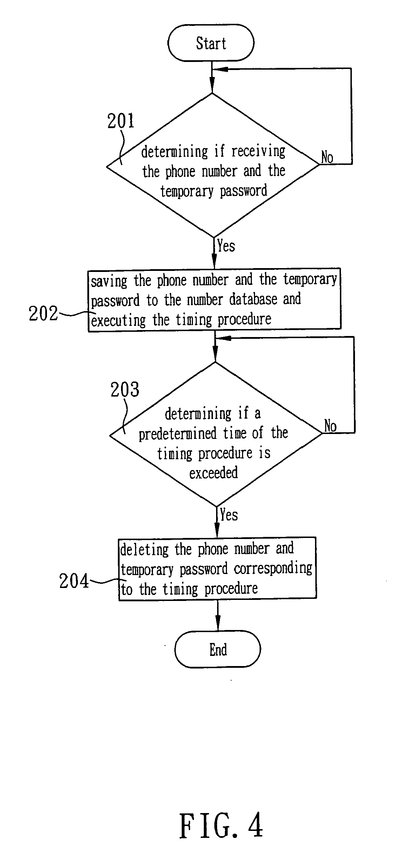

Furthermore, to ensure the reliability of the temporary password, the communication lock server 13 can further execute the timing procedure 132 after receiving the phone number and the temporary password. Referring now to FIGS. 1 and 4, the process flowchart of the timing procedure 132 is described, as follows:
In a step 201, determining if receiving the phone number and the temporary password; if yes, going to a step 202; and if not, going back to the step 201;
In the step 202, saving the phone number and the temporary password to the number database 131 and executing the timing procedure 132, and then going to a step 203;
In the step 203, determining if a predetermined time of the timing procedure 132 is exceeded; if yes, going to a step 204; and if not, going back to the step 203; and
In the step 204, deleting the phone number and temporary password corresponding to the timing procedure 132.

Generally, the predetermined time of the timing procedure 132 is preset not too long, and the user will immediately use the terminal device 31 to login the game server 15 for playing the game after presetting the temporary password. In this case, an illegal user can not use the same game account to repeat login the game server 15, while the temporary password is rapidly deleted after a predetermined time. Thus, even though the illegal user obtains the temporary password, the illegal user still can not control the game account of the user. As a result, the safety of the game account can be efficiently ensured and increased, while the user needs not worry about the possible lost of the temporary password.

As described above, according to the bidirectional communication certification mechanism of the present invention, when the user finishes the entire login procedure, the user needs to input the game account and the game password, and then needs to further input the predetermined phone number and use the temporary password preset through the phone number for finishing the login procedure. Thus, the stolen risk of the user's game account completely controlled by the illegal user can be lowered down. Meanwhile, after the user presets the temporary password, the terminal device of the user must finish the login procedure within a predetermined time (such as 3 mins) for successfully logging in the game or starting the services provided by the game provider. As a result, the safety of the game account can be further efficiently increased.

It should be noted that the present invention are not limited to the terms used in the preferred embodiment thereof, and the person skilled in the art can understand that the method concept of the present invention can be implement by other structures, devices and systems to carry out the same object of the present invention. Thus, the claims of the present invention should include equivalent structures without departing from the scope and the spirit of the invention. Furthermore, although the preferred embodiment of the present invention is described by a plurality of servers and databases, the servers and databases are only used to conveniently help the person skilled in the art to rapidly understand the content and concept of the specification of the present invention without limiting to the foregoing hardware system framework. In actual implementation, the person skilled in the art can integrate a plurality of servers or databases into one unit or integrate the interactive voice module into the server according to the technical feature of the present invention, without limitation.

The present invention has been described with a preferred embodiment thereof and it is understood that many changes and modifications to the described embodiment can be carried out without departing from the scope and the spirit of the invention that is intended to be limited only by the appended claims.

## Claims

1. A communication certification system (1) of a bidirectional communication certification mechanism, comprising:
an interactive voice module (11) connected to a voice communication network (2) for receiving a call-in message transmitted from a phone (21) and capturing a phone number corresponding to the call-in message, so as to obtain a temporary password transmitted from the phone (21);
a communication lock server (13) connected to the interactive voice module (11) for transmitting messages to each other and for saving the phone number and the corresponding temporary password transmitted from the interactive voice module (11); and
a game server (15) connected to the Internet (3) for receiving a login request message of communication lock transmitted from a terminal device (31), wherein the game server (15) stores a plurality of user data, each of which includes a game account, a game password and at least one phone number;
wherein the game server (15) compares the game account, the game password and the phone number included in the login request message of communication lock with the user data in a case that the game server (15) receives a login request message of communication lock, and the game server (15) transmits a certification message to the communication lock server (13) after comparing to find out a complete matched user data, and the terminal device (31) is allowed to login the game server (15) if certificating that a phone number and a corresponding temporary password matched with the login request message of communication lock are existed in the communication lock server (13).

2. The communication certification system according to Claim 1, wherein the communication lock server (13) is provided with a number database (131) therein for saving the phone number and the corresponding temporary password.

3. The communication certification system according to Claim 2, wherein the game server (15) has a user database (151) therein for storing the user data.

4. The communication certification system according to Claim 3, wherein the communication lock server (13) is further provided with a timing procedure (132), which is started to time in a case that the communication lock server (13) saves the received phone number and the corresponding temporary password in the number database (131), and the communication lock server (13) deletes the phone number and the corresponding temporary password if a predetermined time of the timing procedure (132) is exceeded.

5. The communication certification system according to Claim 4, wherein the interactive voice module (11) is an interactive voice response system.

6. A communication certification method of a bidirectional communication certification mechanism, applied to a communication certification system (1), the method comprising:
capturing a phone number corresponding to a call-in message after receiving the call-in message transmitted from a phone (21);
receiving a temporary password transmitted from the phone (21) after the phone (21) is connected;
saving the phone number and the temporary password in a number database (131);
receiving a login request message of communication lock transmitted from a terminal device (31);
reading a game account, a game password, a phone number and a temporary password included in the login request message of communication lock, and then comparing the game account, the game password and the phone number with user data in a user database (151); and
certificating if a matched phone number and a corresponding temporary password are existed in the number database (131) after comparing to find out a user data complete matched with the game account, the game password and the phone number, and then allowing the terminal device (31) to finish a login procedure after passing the certification.

7. The communication certification method according to Claim 6, further comprising:
denying the terminal device (31) to finish the login procedure if comparing to find no matched user data.

8. The communication certification method according to Claim 6, further comprising:
denying the terminal device (31) to finish the login procedure if comparing to find no matched phone number and corresponding temporary password existed in the number database (131).

9. The communication certification method according to Claim 6, wherein the communication lock server (13) is provided with further provided with a timing procedure (132), and the communication certification method further comprises:
starting the timing procedure (132); and
determining if a predetermined time of the timing procedure (132) is exceeded.

10. The communication certification method according to Claim 9, further comprising:
deleting the phone number and the corresponding temporary password if determining that the predetermined time of the timing procedure (132) is exceeded.
